# EUROPEAN PATENT APPLICATION

(11) **EP 4 715 689 A1**
(43) Date of publication of application: **25.03.2026**
(21) Application number: 25203416.0
(22) Date of filing: 19.09.2025
(51) Int. Cl.: G06N 10/20, G06N 10/70

(54) **APPARATUS AND METHOD FOR OPTIMIZING LOGICAL QUANTUM CIRCUIT**

(30) Priority: 20.09.2024 KR 20240127483; 15.09.2025 KR 20250131984
(71) Applicant: Electronics and Telecommunications Research Institute, Daejeon 34129 (KR)
(72) Inventor: OH, Soo-Cheol, 34129 Daejeon (KR); KIM, Young-Chul, 34129 Daejeon (KR); KIM, Chei-Yol, 34129 Daejeon (KR); ON, Jin-Ho, 34129 Daejeon (KR); LEE, Sang-Min, 34129 Daejeon (KR); CHO, Eun-Young, 34129 Daejeon (KR); JIN, Ki-Sung, 34129 Daejeon (KR); CHA, Gyu-Il, 34129 Daejeon (KR)
(74) Representative: Betten & Resch

(57) **Abstract**

Disclosed herein is an apparatus and method for optimizing a logical quantum circuit. The apparatus moves Pauli operations just before a final logical measurement operation within a logical quantum circuit by performing a Pauli frame, generates an optimization block on a block basis by separating logical operations within the logical quantum circuit into sections, rearranges the order of logical operations within the optimization block, merges consecutive logical operations, among the rearranged logical operations, and sets consecutive logical operations within the logical quantum circuit to be performed in parallel.

## Description

### BACKGROUND OF THE INVENTION

### 1. Technical Field

The present disclosure relates generally to quantum computing technology, and more particularly to technology for optimizing a logical quantum circuit in a quantum system.

### 2. Description of the Related Art

A quantum circuit is a circuit for performing quantum operations using qubits and is configured with a combination of quantum operations on qubits. When optimization tasks are performed on such a quantum circuit, the circuit size may be reduced, whereby the execution time may be reduced. Existing optimization methods target physical qubit systems.

A quantum computer is a computer that processes data using quantum mechanical phenomena such as entanglement, superposition, and the like. Quantum computers are regarded as next-generation computers that can overcome limitations of semiconductor-based classical computers. However, technology research related to quantum computers has fallen short of realizing quantum computers.

Quantum computers are being actively researched by various companies. The recent quantum computers are in the early stages of development at the level of supporting about 50 qubits having errors and have not been put to practical use.

Existing quantum circuit optimization changes the order of quantum operations or converting the quantum operations into different forms of operations, thereby reducing the size of a quantum circuit and the execution time while deriving the same operation result. These optimization methods are aimed at physical qubit systems.

A logical qubit system based on a surface code performs logical quantum operations by utilizing lattice surgery in order to reduce errors of physical qubits. Lattice surgery is a method of performing logical quantum operations by merging and splitting logical qubits using various boundaries.

The present disclosure proposes a method for optimizing a logical quantum circuit by utilizing the characteristics of a surface code and lattice surgery.

Meanwhile, U.S. Patent No. 11783217 titled "Quantum circuit optimization" discloses a method for replacing a specific gate pattern in a quantum circuit with a less expensive gate pattern in a library.

### SUMMARY OF THE INVENTION

An object of the present disclosure is to optimize a logical quantum circuit in a logical qubit system using a surface code and lattice surgery.

Another object of the present disclosure is to reduce the size of a logical quantum circuit and to reduce the execution time of the logical quantum circuit.

A further object of the present disclosure is to reduce the resources required for magic state distillation and transfer that are additionally required for logical S and T operations.

In order to accomplish the above objects, an apparatus for optimizing a logical quantum circuit according to an embodiment of the present disclosure includes one or more processors and memory for storing at least one program executed by the one or more processors, and the at least one program moves Pauli operations just before a final logical measurement operation within a logical quantum circuit by performing a Pauli frame, generates an optimization block on a block basis by separating logical operations within the logical quantum circuit into sections, rearranges the order of logical operations within the optimization block, merges consecutive logical operations, among the rearranged logical operations, and sets consecutive logical operations within the logical quantum circuit to be performed in parallel.

Here, the at least one program may move a logical X operation and a logical Z operation within the logical quantum circuit just before a logical measurement operation.

Here, the at least one program may transform a logical X operation located before a logical T operation within the logical quantum circuit into a logical X S operation and move the transformed operation after the logical T operation.

Here, the at least one program may set a start point and an end point of the optimization block based on a logical H operation and an operation performed on at least one target qubit of a logical CNOT operation within the logical quantum circuit.

Here, the at least one program may perform rearrangement on logical operations excluding logical operations at the start point and end point of the optimization block.

Here, the at least one program may arrange the logical operations subject to the rearrangement in the order of a logical T operation, a logical S operation, and a logical CNOT_C operation.

Here, the at least one program may merge two consecutive logical T operations, among the rearranged logical operations, thereby transforming the two consecutive logical T operations into a single logical S operation.

Here, the at least one program may merge two consecutive logical S operations, among the rearranged logical operations, thereby transforming the two consecutive logical S operations into a single logical Z operation.

Here, the at least one program may set the consecutive logical operations to be performed in parallel by performing at least one of changing a predetermined execution condition, or changing a magic state, or a combination thereof in order to combine at least two of predetermined consecutive logical operations, among the rearranged logical operations.

Here, for consecutive logical T and logical S operations, among the rearranged logical operations, the at least one program may change a condition for executing a predetermined selective execution part of the logical T operation, which is identical to the logical S operation, and combine the logical S operation and the selective execution part of the logical T operation.

Here, for consecutive logical S and logical CNOT_C operations, among the rearranged logical operations, the at least one program may change an ancilla logical qubit in a first part of the logical CNOT_C operation to be identical to a magic qubit for an ancilla logical qubit of the logical S operation and may combine the logical S operation and the first part of the logical CNOT_C operation.

Here, for consecutive logical T and logical CNOT_C operations, among the rearranged logical operations, the at least one program may change an ancilla logical qubit in a predetermined first part of the logical CNOT_C operation to be identical to a magic qubit for an ancilla logical qubit of a first part of the logical T operation, combine the predetermined first part of the logical CNOT_C operation and the first part of the logical T operation, and arrange the combined first part, a predetermined second part of the logical CNOT_C operation, and a selective execution part of the logical T operation in the order in which they are listed.

Here, for consecutive logical T, logical S, and logical CNOT_C operations, among the rearranged logical operations, the at least one program may combine a first part of the logical T operation and a first part of the logical CNOT_C operation, arrange a second part of the logical CNOT_C operation after the combined first part, and arrange a combination of a selective execution part of the logical T operation and the logical S operation at the end.

Also, in order to accomplish the above objects, a method for optimizing a logical quantum circuit, performed by an apparatus for optimizing a logical quantum circuit, according to an embodiment of the present disclosure includes moving Pauli operations just before a final logical measurement operation within a logical quantum circuit by performing a Pauli frame, generating an optimization block on a block basis by separating logical operations within the logical quantum circuit into sections, rearranging the order of logical operations within the optimization block, merging consecutive logical operations, among the rearranged logical operations, and setting consecutive logical operations within the logical quantum circuit to be performed in parallel.

Here, moving the Pauli operations may comprise moving a logical X operation and a logical Z operation within the logical quantum circuit just before a logical measurement operation.

Here, moving the Pauli operations may comprise transforming a logical X operation located before a logical T operation within the logical quantum circuit into a logical X S operation and moving the transformed operation after the logical T operation.

Here, generating the optimization block may comprise setting a start point and an end point of the optimization block based on a logical H operation and an operation performed on at least one target qubit of a logical CNOT operation within the logical quantum circuit.

Here, generating the optimization block may comprise performing rearrangement on logical operations, excluding logical operations at the start point and end point of the optimization block.

Here, rearranging the order may comprise arranging the logical operations subject to the rearrangement in the order of a logical T operation, a logical S operation, and a logical CNOT_C operation.

Here, merging the consecutive logical operations may comprise merging two consecutive logical T operations, among the rearranged logical operations, thereby transforming the two consecutive logical T operations into a single logical S operation.

Here, merging the consecutive logical operations may comprise merging two consecutive logical S operations, among the rearranged logical operations, thereby transforming the two consecutive logical S operations into a single logical Z operation.

Here, setting the consecutive logical operations to be performed in parallel may comprise setting the consecutive logical operations to be performed in parallel by performing at least one of changing a predetermined execution condition, or changing a magic state, or a combination thereof in order to combine at least two of predetermined consecutive logical operations, among the rearranged logical operations.

Here, setting the consecutive logical operations to be performed in parallel may comprise, for consecutive logical T and logical S operations, among the rearranged logical operations, changing a condition for executing a predetermined selective execution part of the logical T operation, which is identical to the logical S operation, and combining the logical S operation and the selective execution part of the logical T operation.

Here, setting the consecutive logical operations to be performed in parallel may comprise, for consecutive logical S and logical CNOT_C operations, among the rearranged logical operations, changing an ancilla logical qubit in a first part of the logical CNOT_C operation to be identical to a magic qubit for an ancilla logical qubit of the logical S operation and combining the logical S operation and the first part of the logical CNOT_C operation.

Here, setting the consecutive logical operations to be performed in parallel may comprise, for consecutive logical T and logical CNOT_C operations, among the rearranged logical operations, changing an ancilla logical qubit of a predetermined first part of the logical CNOT_C operation to be identical to a magic qubit for an ancilla logical qubit of a first part of the logical T operation, combining the predetermined first part of the logical CNOT_C operation and the first part of the logical T operation, and arranging the combined first part, a predetermined second part of the logical CNOT_C operation, and a selective execution part of the logical T operation in the order in which they are listed.

Here, setting the consecutive logical operations to be performed in parallel may comprise, for consecutive logical T, logical S, and logical CNOT_C operations, among the rearranged logical operations, combining a first part of the logical T operation and a first part of the logical CNOT_C operation, arranging a second part of the logical CNOT_C operation after the combined first part, and arranging a combination of a selective execution part of the logical T operation and the logical S operation at the end.

### BRIEF DESCRIPTION OF THE DRAWINGS

The above and other objects, features, and advantages of the present disclosure will be more clearly understood from the following detailed description taken in conjunction with the accompanying drawings, in which:
FIG. 1 is a block diagram illustrating an apparatus for optimizing a logical quantum circuit according to an embodiment of the present disclosure;
FIG. 2 is a view illustrating a logical quantum circuit before a logical qubit Pauli frame is applied according to an embodiment of the present disclosure;
FIG. 3 is a view illustrating a logical qubit Pauli frame for a logical T operation according to an embodiment of the present disclosure;
FIG. 4 is a view illustrating a logical quantum circuit after a logical qubit Pauli frame is applied according to an embodiment of the present disclosure;
FIG. 5 is a view illustrating an example of a logical quantum circuit before a logical qubit Pauli frame is applied according to an embodiment of the present disclosure;
FIG. 6 is a view illustrating an example of a logical quantum circuit after a logical qubit Pauli frame is applied according to an embodiment of the present disclosure;
FIG. 7 is a view illustrating a result of generation of an optimization block according to an embodiment of the present disclosure;
FIG. 8 is a view illustrating an optimization block after rearrangement of logical quantum operations is applied according to an embodiment of the present disclosure;
FIG. 9 is a view illustrating an example of a logical quantum circuit after rearrangement of logical quantum operations is applied according to an embodiment of the present disclosure;
FIG. 10 is a view illustrating a structure of an optimization block after logical S/T operation optimization is applied according to an embodiment of the present disclosure;
FIG. 11 is a view illustrating an example of a logical quantum circuit after logical S/T operation optimization is applied according to an embodiment of the present disclosure;
FIG. 12 is a view illustrating consecutive logical T and S operations before optimization and a process of simultaneously performing the operations after optimization according to an embodiment of the present disclosure;
FIG. 13 is a view illustrating consecutive logical S and CNOT_C operations before optimization and a process of simultaneously performing the operations after optimization according to an embodiment of the present disclosure;
FIG. 14 is a view illustrating consecutive logical T and CNOT_C operations before optimization and a process of simultaneously performing the operations after optimization according to an embodiment of the present disclosure;
FIG. 15 is a view illustrating consecutive logical T, S, and CNOT_C operations before optimization and a process of simultaneously performing the operations after optimization according to an embodiment of the present disclosure;
FIG. 16 is a flowchart illustrating a method for optimizing a logical quantum circuit according to an embodiment of the present disclosure; and
FIG. 17 is a view illustrating a computer system according to an embodiment of the present disclosure.

### DESCRIPTION OF THE PREFERRED EMBODIMENTS

The present disclosure will be described in detail below with reference to the accompanying drawings. Repeated descriptions and descriptions of known functions and configurations which have been deemed to unnecessarily obscure the gist of the present disclosure will be omitted below. The embodiments of the present disclosure are provided to fully describe the present disclosure to a person having ordinary knowledge in the art. Accordingly, the shapes, sizes, etc. of components in the drawings may be exaggerated in order to make the description clearer.

Throughout the specification, when a part "includes" a component, which means that it may further include other components, rather than excluding other components, unless otherwise specified.

Because the present disclosure may be variously changed and may have various embodiments, specific embodiments will be described in detail below with reference to the attached drawings.

However, it should be understood that those embodiments are not intended to limit the present disclosure to specific disclosure forms and that they include all changes, equivalents or modifications included in the spirit and scope of the present disclosure.

Various terms, such as "first", "second", "A", "B", "(a)", "(b)", etc., can be used to describe components of embodiments of the present disclosure. These terms merely differentiate one component from the other, but the substances, order, or sequence of the components are not limited by the terms.

Unless defined differently, all terms used herein, including technical or scientific terms, have the same meanings as terms generally understood by those skilled in the art to which the present disclosure pertains. Terms identical to those defined in generally used dictionaries should be interpreted as having meanings identical to contextual meanings of the related art, and are not to be interpreted as having ideal or excessively formal meanings unless they are definitively defined in the present specification.

In the present disclosure, it will be understood that when a component is referred to as being "connected" or "coupled" to another component, it can be directly connected or coupled to the other component, or intervening components may be present.

The terms used herein are for the purpose of describing particular embodiments only and are not intended to limit the present disclosure. As used herein, the singular forms are intended to include the plural forms as well, unless the context clearly indicates otherwise. It will be further understood that the terms "comprises," "comprising,", "includes" and/or "including," when used herein, specify the presence of stated features, integers, steps, operations, components, or combinations thereof, but do not preclude the presence or addition of one or more other features, integers, steps, operations, components, or combinations thereof.

Hereinafter, preferred embodiments of the present disclosure will be described in detail with reference to the accompanying drawings. In the following description of the present disclosure, independent reference numerals are used for components that may be the same in the drawings, in order to facilitate an overall understanding.

A method of transferring a logical quantum state through partial correction and partial syndrome measurements in logical state teleportation will be described below as an example of a logical qubit operation using a logical operator joint measurement technique in a rotated surface code, which is a quantum error correction technique.

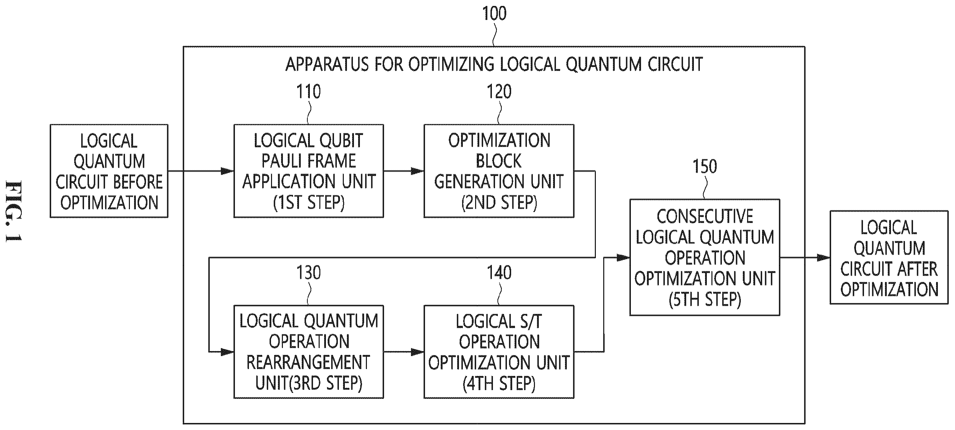

FIG. 1 is a block diagram illustrating an apparatus for optimizing a logical quantum circuit according to an embodiment of the present disclosure.

Referring to FIG. 1, the apparatus for optimizing a logical quantum circuit may perform two optimization tasks. As the first optimization task, an optimization task for reducing the number of logical S and T operations within a logical quantum circuit may be performed. As the second optimization task, an optimization task for reducing the execution time of the entire circuit by simultaneously performing consecutive logical operations may be performed.

A logical quantum circuit is a circuit for performing quantum operations using logical qubits, and may be configured with a combination of logical X, Z, S, T, H, and CNOT operations and logical measurement operations.

The apparatus 100 for optimizing a logical quantum circuit may include a logical qubit Pauli frame application unit 110, an optimization block generation unit 120, a logical quantum operation rearrangement unit 130, a logical S/T operation optimization unit 140, and a consecutive logical quantum operation optimization unit 150.

The logical quantum circuit before optimization may be transformed into an optimized logical quantum circuit by passing through a five-step process of the apparatus for optimizing a logical quantum circuit. At the first to fourth steps, optimization for reducing the number of logical S/T operations may be performed, and at the fifth step, optimization for simultaneously performing consecutive logical operations may be performed.

As the first step, the logical qubit Pauli frame application unit 110 performs a Pauli frame for a logical qubit, thereby moving all Pauli operations within the logical quantum circuit just before the final logical measurement operation of the logical quantum circuit.

Here, the logical qubit Pauli frame application unit 110 may additionally support a Pauli frame function for a logical T operation, which was previously impossible.

Here, the logical qubit Pauli frame application unit 110 may simplify the circuit structure by moving a logical X operation and a logical Z operation just before the logical measurement operation.

Here, the logical qubit Pauli frame application unit 110 does not actually perform the Pauli operations and may reflect them when interpreting measurement results.

Here, the logical qubit Pauli frame application unit 110 may move a logical X operation located before a logical T operation to the later stage by transforming the same into a logical X S operation to enable the movement thereof.

The moved logical S operation is merged or removed in the following optimization process, thereby contributing to a reduction in the total number of operations.

Accordingly, only logical S, T, H, and CNOT operations remain in the operation unit, and X and Z operations are moved to the measurement unit to serve as a basis for lattice surgery optimization.

As the second step, the optimization block generation unit 120 may generate optimization blocks on a block basis by separating operations within the logical quantum circuit into sections.

Here, the optimization block generation unit 120 generates blocks for each logical qubit, and multiple optimization blocks may be present in a single logical qubit.

Here, the optimization block generation unit 120 may set the start point and end point of the optimization block based on a logical H operation and an operation performed on at least one target qubit of a logical CNOT operation within the logical quantum circuit.

Each of the start operation and end operation of a block is set to an H or CNOT_T operation, and a total of four types of block configuration formats may be supported.

The optimization block includes logical S, T, and CNOT_C operations therein, which may be subject to subsequent operation rearrangement and merge optimization.

Here, the optimization block generation unit 120 clearly establishes the boundary between blocks to enable efficient optimization in subsequent steps.

The generated optimization blocks may be used as a basic unit for sequential or parallel processing of logical operations.

An optimization block of the present disclosure is generated for each logical qubit, and multiple optimization blocks may be present in a single logical qubit. The start and end of the optimization block may be set to a logical H operation or an operation performed on a target qubit of a CNOT operation. The logical CNOT operation is performed on two qubits, which are control and target qubits, and in the present disclosure, operations applied to the control and target qubits of a logical CNOT operation are designated by CNOT_C and CNOT_T, respectively. A total of four formats may be set for the start and end of an optimization block of the present disclosure.
1) Start (logical H operation), end (logical H operation)
2) Start (logical H operation), end (logical CNOT_T operation)
3) Start (logical CNOT_T operation), end (logical H operation)
4) Start (logical CNOT_T operation), end (logical CNOT_T operation)

As the third step, the logical quantum operation rearrangement unit 130 may perform a task of rearranging the order of logical quantum operations within the optimization block.

The logical quantum operation rearrangement unit 130 may perform rearrangement for logical operations, excluding the logical operations at the start point and end point of the optimization block.

Here, the logical quantum operation rearrangement unit 130 performs an optimization task for logical S, T, and CNOT_C operations within the optimization block, excluding the logical quantum operations that specify the start and end of the optimization block.

The logical S, T, and CNOT_C operations have no dependencies, and the order thereof may be freely changed.

However, consecutive logical CNOT_C operations may maintain their order because a dependency relationship between qubits may occur.

The logical quantum operation rearrangement unit 130 may arrange the operations in the order of T → S → CNOT_C as the rearrangement result.

Accordingly, the logical quantum operation rearrangement unit 130 may facilitate the optimization task to be performed by the logical S/T operation optimization unit 140 and the consecutive logical quantum operation optimization unit 150.

As the fourth step, the logical S/T operation optimization unit 140 may reduce the total number of logical S and T operations by merging consecutive logical S operations and consecutive logical T operations.

Here, the logical S/T operation optimization unit 140 may reduce the number of logical T operations by merging two consecutive logical T operations and transforming the same into a single S operation, as the first process.

If an even number (2N) of logical T operations are present, all of the logical T operations are merged and disappear, and they are transformed into N logical S operations. If an odd number (2N+1) of logical T operations are present, they are transformed into a single logical T operation and N logical S operations. Here, N is an integer equal to or greater than zero (N >= 0).

Here, the logical S/T operation optimization unit 140 may reduce the number of logical S operations by merging two consecutive logical S operations and transforming the same into a single Z operation, as the second process.

If an even number (2N) of logical S operations are present, all of the logical S operations are merged and disappear, and they are transformed into N logical Z operations. If an odd (2N+1) number of logical S operations are present, they are transformed into a single logical S operation and N logical Z operations. The logical Z operations generated in the second process are moved just before the logical measurement operation within the measurement unit by applying a logical qubit Pauli frame. Here, N is an integer equal to or greater than zero (N >= 0).

As the fifth step, the consecutive logical quantum operation optimization unit 150 may perform optimization that reduces the execution time by setting consecutive logical quantum operations to be simultaneously performed in parallel, rather than sequentially, when they are performed using lattice surgery.

Here, the consecutive logical quantum operation optimization unit 150 may set a combination of a logical T operation, a logical S operation, and a CNOT_C operation applied to a control qubit of a logical CNOT operation as the target to be performed in parallel.

Here, the consecutive logical quantum operation optimization unit 150 applies a lattice surgery-based parallel execution technique to inject a magic state (|A〉 or |Y〉) into an ancilla logical qubit and to perform boundary merge and split between a data logical qubit and the ancilla qubit.

Here, the consecutive logical quantum operation optimization unit 150 determines whether to perform selective execution depending on the joint measurement value jₘ of the data logical qubit and the ancilla qubit and may perform an additional merge operation depending on the determination result.

Here, the consecutive logical quantum operation optimization unit 150 may apply individual parallel execution techniques for four combinations (T+S, S+CNOT_C, T+CNOT_C, and T+S+CNOT_C).

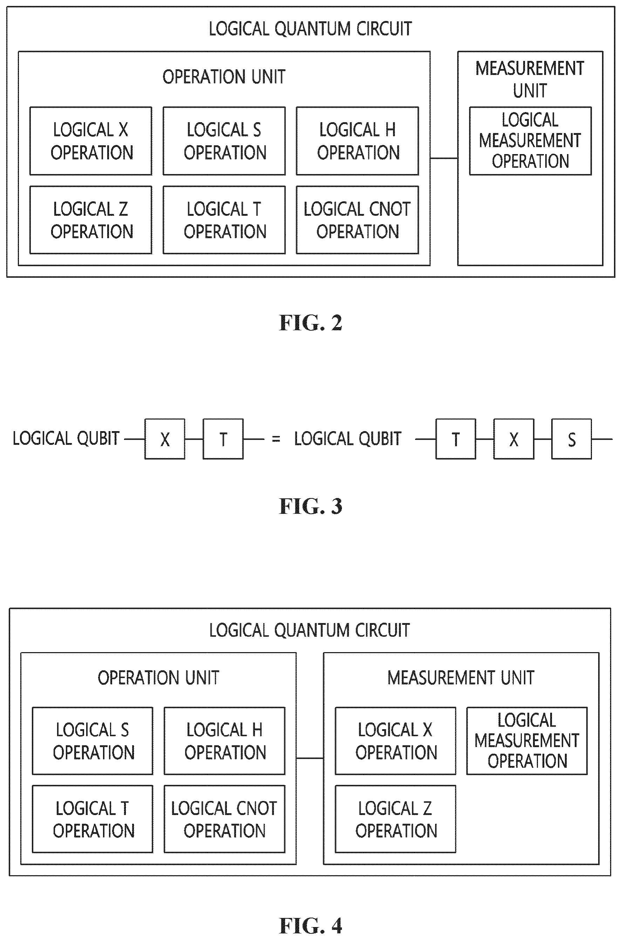

FIG. 2 is a view illustrating a logical quantum circuit before a logical qubit Pauli frame is applied according to an embodiment of the present disclosure.

Referring to FIG. 2, the logical quantum circuit may include an operation unit and a measurement unit. The operation unit may include logical X, Z, S, T, H, and CNOT operations. The measurement unit may include a logical measurement operation. Also, the operation unit may be performed first, and then the measurement unit may be finally performed.

In quantum circuits, X and Z operations are referred to as Pauli operations. By applying the existing physical qubit-based Pauli frame, X and Z operations within a quantum circuit may be moved just before the measurement operation at the end of the circuit, and this may also be applied to a logical qubit system in the same manner. The X and Z operations moved just before the measurement operation are not actually performed and may be used to correct measurement results. Here, an X operation before a T operation has a problem in which it is not allowed to apply a Pauli frame thereto and it should be executed on the qubit. In the present disclosure, a Pauli frame for a logical X operation before a logical T operation may be represented, as shown in FIG. 3.

FIG. 3 is a view illustrating a logical qubit Pauli frame for a logical T operation according to an embodiment of the present disclosure.

Referring to FIG. 3, it can be seen that, when a logical qubit Pauli frame is applied to a logical quantum circuit, a logical X operation before a logical T operation is transformed into a logical X S operation and moved after the logical T operation. The logical X operation in the logical X S operation is moved just before a logical measurement operation at the end of the logical quantum circuit when a logical qubit Pauli frame is applied, and it may be used to correct logical measurement results without actually being performed. Also, the logical S operation in the logical X S operation may be deleted through the subsequent optimization process of the second to fifth steps or may reduce the actual execution time.

FIG. 4 is a view illustrating a logical quantum circuit after a logical qubit Pauli frame is applied according to an embodiment of the present disclosure.

Referring to FIG. 4, it can be seen that a result of application of a logical qubit Pauli frame to a logical quantum circuit is illustrated. It can be seen that, when the logical qubit Pauli frame is applied, all logical X and Z operations within the operation unit are moved just before a logical measurement operation in the measurement unit. As a result, the logical quantum circuit may be transformed into the operation unit including logical S, T, H, and CNOT operations and the measurement unit including logical X, Z, and measurement operations. The logical X and Z operations in the measurement unit are not actually performed and may be used to correct results of the final logical measurement operation. The operation unit is actually performed using lattice surgery and may affect the execution time of the logical quantum circuit. Therefore, at the second to fifth steps, optimization may be performed for the logical quantum operations that remain in the operation unit after the first step is performed.

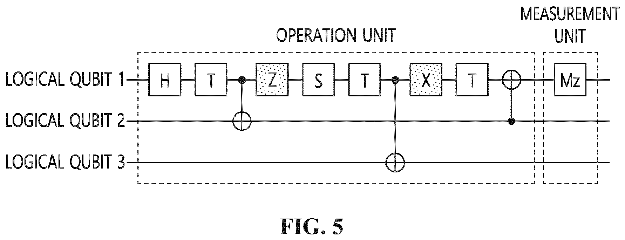

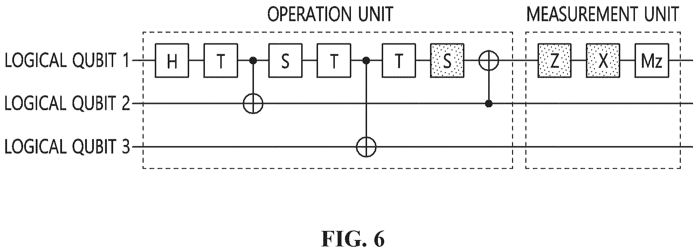

FIG. 5 is a view illustrating an example of a logical quantum circuit before a logical qubit Pauli frame is applied according to an embodiment of the present disclosure. FIG. 6 is a view illustrating an example of a logical quantum circuit after a logical qubit Pauli frame is applied according to an embodiment of the present disclosure.

Referring to FIGS. 5 and 6, examples before and after application of a logical qubit Pauli frame are illustrated, and logical quantum operations are illustrated only in logical qubit 1 for the convenience of description. Mz represents a logical Z-basis measurement operation. It can be seen that, when a logical qubit Pauli frame is applied in FIG. 5, the logical Z operation before the logical S operation is moved before the logical measurement operation in the measurement unit as shown in FIG. 6. It can be seen that the logical X operation before the logical T operation in FIG. 5 is transformed into a logical X S operation and is then moved after the logical T operation as shown in FIG. 6. In FIG. 6, it can be seen that the logical X operation in the logical X S operation is moved just before the logical measurement operation within the measurement unit by a logical qubit Pauli frame.

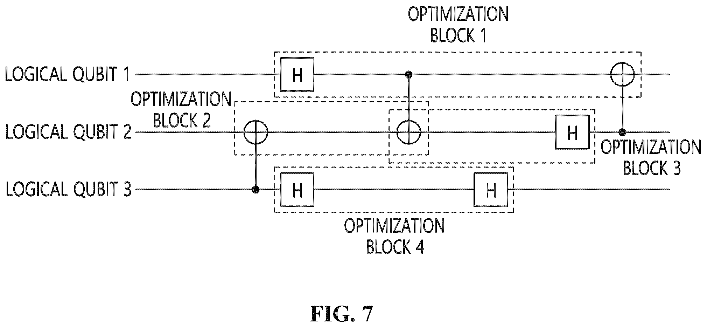

FIG. 7 is a view illustrating a result of generation of an optimization block according to an embodiment of the present disclosure.

Referring to FIG. 7, an example in which four optimization blocks are generated in three logical qubit systems is illustrated. Logical qubit 1 has optimization block 1 that starts with a logical H operation and ends with a logical CNOT_T operation. Logical qubit 2 has optimization block 2 and optimization block 3. Here, optimization block 2 starts and ends with a logical CNOT_T operation. Optimization block 3 starts with a logical CNOT_T operation and ends with a logical H operation. Logical qubit 3 has optimization block 4 that starts and ends with a logical H operation. Inside each optimization block, logical S, T, and CNOT_C operations are arranged in an arbitrary order. Referring to FIG. 6 again, logical qubit 1 has a single optimization block that starts with a logical H operation and ends with a logical CNOT_T operation.

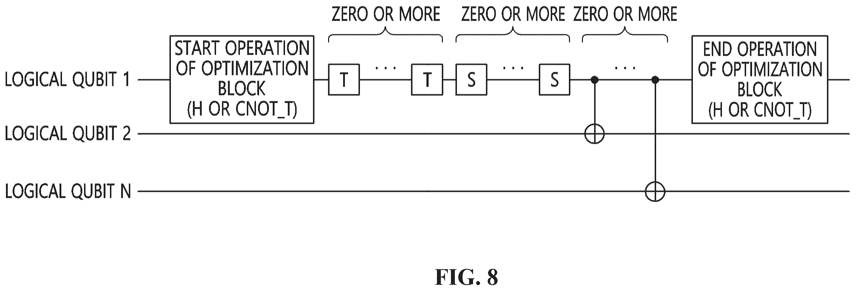

FIG. 8 is a view illustrating an optimization block after rearrangement of logical quantum operations is applied according to an embodiment of the present disclosure.

Referring to FIG. 8, in each optimization block, logical S, T, and CNOT_C operations are arranged in an arbitrary order, and their execution order may be freely changed. Here, there is one exception in which consecutive logical CNOT_C operations do not change their order. This is because there may be dependencies between target logical qubits related to the logical CNOT_C operation. Using this rule, rearrangement of logical quantum operations within the optimization block may be performed, as shown in FIG. 8. First, zero or more logical T operations are arranged and followed by zero or more logical S operations. Finally, zero or more CNOT_C operations are arranged after the logical S operations.

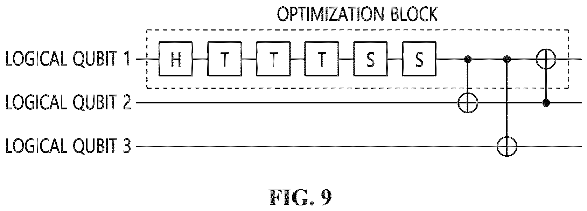

FIG. 9 is a view illustrating an example of a logical quantum circuit after rearrangement of logical quantum operations is applied according to an embodiment of the present disclosure.

Referring to FIG. 9, it illustrates an example in which the optimization task of the third step is performed on the example in FIG. 6 in which the optimization task of the second step has been performed. In the optimization block of logical qubit 1 in FIG. 6, three logical T operations, two logical S operations, and two logical CNOT_C operations are arranged in an arbitrary order. It can be seen that their order is rearranged, so the logical quantum operations are arranged in the order of the logical T operations, the logical S operations, and the logical CNOT_C operations, as shown in FIG. 9.

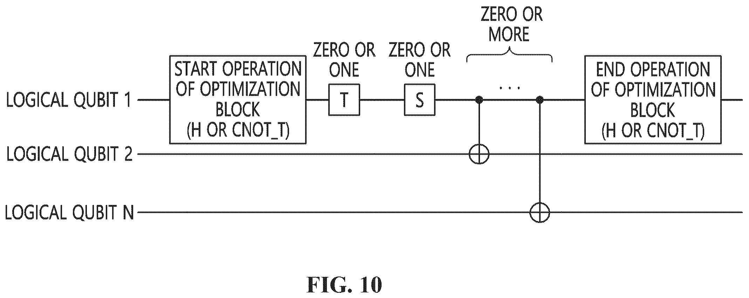

FIG. 10 is a view illustrating a structure of an optimization block after logical S/T operation optimization is applied according to an embodiment of the present disclosure.

Referring to FIG. 10, it can be seen that, after logical S/T operation optimization is applied, the optimization block includes zero or one logical T operation, zero or one logical S operation, and zero or more CNOT_C operations that are arranged in the order in which they are listed.

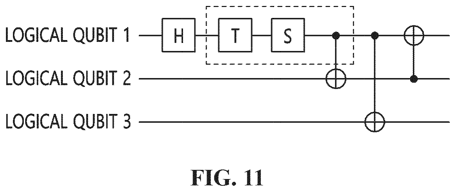

FIG. 11 is a view illustrating an example of a logical quantum circuit after logical S/T operation optimization is applied according to an embodiment of the present disclosure.

Referring to FIG. 11, it illustrates a result acquired after the optimization task of the fourth step is performed on the example in FIG. 9, which is the result of the third step. The logical T, T, T, S, and S operations in FIG. 9 are transformed into the logical T, S, S, and S operations through the first process, and then they are transformed into the logical T, S, and Z operations through the second process. The logical Z operation is moved just before the logical measurement operation within the measurement unit by using a logical qubit Pauli frame. The two CNOT_C operations remain without transformation.

Here, the consecutive logical quantum operation optimization unit 150 may perform an optimization task that reduces an execution time by simultaneously performing consecutive T, S, and CNOT_C operations. In the existing method, when consecutive logical quantum operations are present, they are sequentially performed by performing a subsequent logical quantum operation only after completion of execution of a preceding logical quantum operation. The consecutive logical quantum operation optimization unit 150 may support a lattice-surgery method that provides a faster execution time by performing the consecutive logical T, S, and CNOT_C operations simultaneously, not sequentially. Here, zero or one logical T and S operations may be present, and zero or more logical CNOT_C operations may be present. The consecutive logical quantum operation optimization unit 150 sets the logical T and S operations and the first CNOT_C operation, among the zero or more CNOT_C operations, as optimization targets. As illustrated in FIG. 11, the logical T and S operations and the first logical CNOT_C operation, which are separated by a dotted rectangle, may be the optimization targets.

Table 1 shows a combination of logical quantum operations that are subject to optimization of the fifth step according to an embodiment of the present disclosure.

**[Table 1]**

| Logical quantum operation combination | Logical quantum operation 1 | Logical quantum operation 2 | Logical quantum operation 3 | Execution time before optimization | Execution time after optimization |
|---|---|---|---|---|---|
| 1 | T | S | | 7.5T | 4.5T |
| 2 | | S | CNOT_C | 8T | 5T |
| 3 | T | | CNOT_C | 9.5T | 6.5T |
| 4 | T | S | CNOT_C | 12.5T | 8T |

Referring to Table 1, it can be seen that four combinations of logical T, S, and CNOT_C operations that can be derived as the result of optimization of the fourth step are illustrated. The optimization at the fifth step intends to optimize logical T, S, and CNOT_C operations. Here, it can be seen that logical quantum operation combination 1 is a combination of consecutive logical T and S operations, logical quantum operation combination 2 is a combination of consecutive logical S and CNOT_C operations, logical quantum operation combination 3 is a combination of consecutive logical T and CNOT_C operations, and logical quantum operation combination 4 is a combination of consecutive logical T, S, and CNOT_C operations.

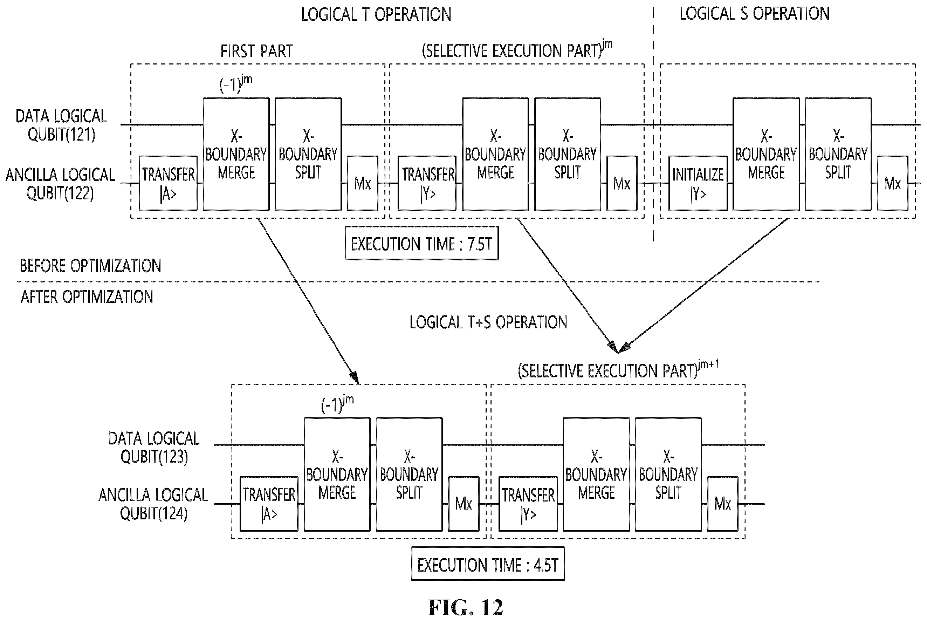

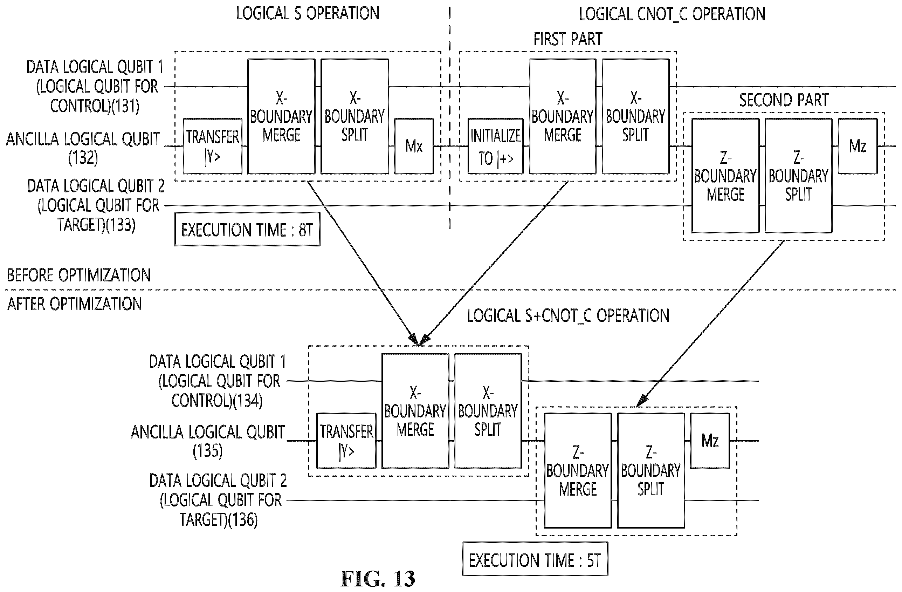

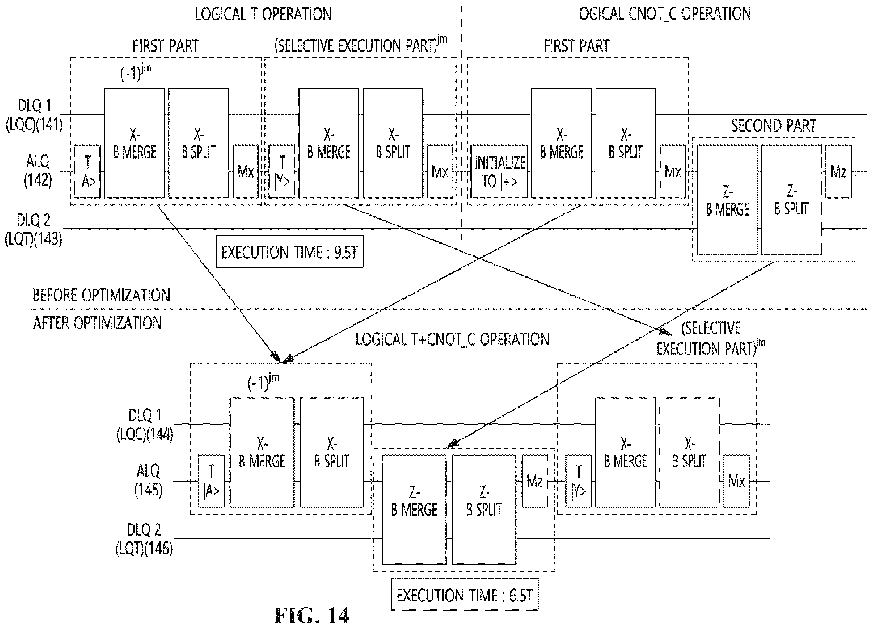

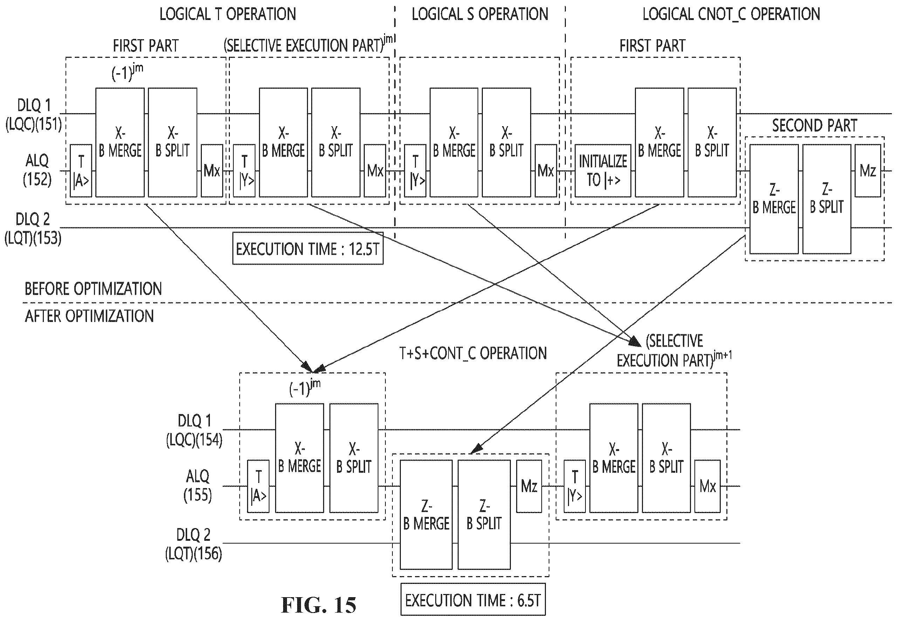

FIG. 12 is a view illustrating consecutive logical T and S operations before optimization and a process of simultaneously performing the operations after optimization according to an embodiment of the present disclosure. FIG. 13 is a view illustrating consecutive logical S and CNOT_C operations before optimization and a process of simultaneously performing the operations after optimization according to an embodiment of the present disclosure. FIG. 14 is a view illustrating consecutive logical T and CNOT_C operations before optimization and a process of simultaneously performing the operations after optimization according to an embodiment of the present disclosure. FIG. 15 is a view illustrating consecutive logical T, S, and CNOT_C operations before optimization and a process of simultaneously performing the operations after optimization according to an embodiment of the present disclosure.

Referring to FIGS. 12 to 15, it can be seen that logical quantum operation combinations 1 to 4 before optimization and the method of simultaneously performing the operations after optimization are illustrated. In order to explain optimization, a logical quantum operation is represented using a detailed execution method using lattice surgery. Logical X and Z operations included in the logical operation execution method using lattice surgery are omitted because they can be moved just before a logical measurement operation within a measurement unit by applying a logical qubit Pauli frame. Also, an ancilla logical qubit required for lattice surgery is added, and the logical qubits for which an actual logical quantum operation should be performed are represented as data logical qubits. Mx or Mz logical measurement operations for an ancilla logical qubit do not affect the execution time.

Referring to FIG. 12, it can be seen that the process of simultaneously performing consecutive logical T and S operations included in logical quantum operation combination 1 by optimizing the same is illustrated. In FIG. 12, reference numeral 121 denotes a data logical qubit of the circuit before optimization, 122 denotes an ancilla logical qubit of the circuit before optimization, 123 denotes a data logical qubit of the circuit after optimization, and 124 denotes an ancilla logical qubit of the circuit after optimization.

Here, for consecutive logical T and logical S operations, among the rearranged logical operations, a condition for executing a predetermined selective execution part of the logical T operation, which is identical to the logical S operation, may be changed, and then the logical S operation and the selective execution part of the logical T operation may be combined.

First, the first part of the logical T operation before optimization is placed at the beginning of the operations after optimization, without modification. Then, the selective execution part of the logical T operation is to be combined with the logical S operation, and to this end, the condition for executing the selective execution part is changed from jm to jm+1. The selective execution part is identical to the execution content of the logical S operation. The combined operation is placed at the end of the operations after optimization. Accordingly, the selective execution part of the logical T operation and the logical S operation may be simultaneously performed, and finally, the logical T and S operations may be simultaneously performed.

It can be seen that the method of simultaneously performing consecutive logical T and S operations includes the process of transferring the magic state |A〉 to an ancilla logical qubit, the process of deriving a joint measurement value (jm) by performing X-boundary merge and X-boundary split on a data logical qubit and the ancilla logical qubit, and the process of performing the selective execution part depending on the joint measurement value (jm). When the joint measurement value (jm) is 0, the selective execution part is performed, whereas when the joint measurement value (jm) is 1, the selective execution part is not performed. Performing the selective execution part may include the process of transferring the magic state |Y〉 to the ancilla logical qubit and the process of performing X-boundary merge and X-boundary split on the data logical qubit and the ancilla logical qubit.

The average execution time of logical quantum operation combination 1 is reduced from 7.5T in the existing method to 4.5T after optimization. T is a time unit corresponding to one execution of error syndrome measurement required for performing a logical quantum operation. In FIG. 12, each operation represented by a rectangle requires an execution time of 1T, but logical measurement operations such as Mx do not consume time. The execution time is averaged between the case in which the selective execution part is performed and the case in which it is not performed.

Referring to FIG. 13, it illustrates the method of simultaneously performing consecutive logical S and CNOT_C operations included in logical quantum operation combination 2 by optimizing the same. The consecutive logical quantum operations target data logical qubit 1. In FIG. 13, reference numeral 131 denotes a data logical qubit 1 (logical qubit for control) of the circuit before optimization, 132 denotes an ancilla logical qubit of the circuit before optimization, 133 denotes a data logical qubit 2 (logical qubit for target) of the circuit before optimization, 134 denotes a data logical qubit 1 (logical qubit for control) of the circuit after optimization, 135 denotes an ancilla logical qubit of the circuit after optimization, and 136 denotes a data logical qubit 2 (logical qubit for target) of the circuit after optimization.

Here, for consecutive logical S and logical CNOT_C operations, among the rearranged logical operations, an ancilla logical qubit in the first part of the logical CNOT_C operation may be changed to be identical to a magic qubit for an ancilla logical qubit of the logical S operation, and the logical S operation and the first part of the logical CNOT_C operation may be combined.

In FIG. 13, the logical CNOT_C operation is a set of operations that change the state of a control logical qubit in the logical CNOT operation. The optimization process for simultaneously performing the logical S and CNOT_C operations is as follows. First, the logical S operation before optimization is to be combined with the first part of the logical CNOT_C operation, and to this end, initialization to |+〉 for the ancilla logical qubit in the first part of the logical CNOT_C operation is changed to transfer of the magic qubit |Y〉 of the logical S operation. The combined operation is placed at the beginning of the operations after optimization. Then, the second part of the logical CNOT_C operation is placed at the end of the operations after optimization. Accordingly, the logical S operation and the first part of the logical CNOT_C operation may be simultaneously performed, and finally, the logical S and CNOT_C operations may be simultaneously performed.

The method of simultaneously performing consecutive logical S and CNOT_C operations includes the process of transferring the magic state |Y〉 to the ancilla logical qubit, the process of performing X-boundary merge and X-boundary split on data logical qubit 1 and the ancilla logical qubit, and the process of performing Z-boundary merge and Z-boundary split on the ancilla logical qubit and data logical qubit 2.

The execution time of logical quantum operation combination 2 is reduced from 8T in the existing method to 5T after optimization.

Referring to FIG. 14, it can be seen that the process of simultaneously performing consecutive logical T and CNOT_C operations included in logical quantum operation combination 3 by optimizing the same is illustrated. In FIG. 14, reference numeral 141 denotes a data logical qubit 1(DLQ1) (logical qubit for control(LQC)) of the circuit before optimization, 142 denotes an ancilla logical qubit(ALQ) of the circuit before optimization, 143 denotes a data logical qubit 2(DLQ2) (logical qubit for target(LQT)) of the circuit before optimization, 144 denotes a data logical qubit 1(DLQ1) (logical qubit for control(LQC)) of the circuit after optimization, 145 denotes an ancilla logical qubit(ALQ) of the circuit after optimization, and 146 denotes a data logical qubit 2(DLQ2) (logical qubit for target(LQT)) of the circuit after optimization. Further, in FIG. 14, B in B MERGE and B SPLIT denotes boundary, and T in T |A〉 and T |Y〉 denotes transfer.

Here, for consecutive logical T and logical CNOT_C operations, among the rearranged logical operations, an ancilla logical qubit of a predetermined first part of the logical CNOT_C operation may be changed to be identical to a magic qubit for an ancilla logical qubit of the first part of the logical T operation, the predetermined first part of the logical CNOT_C operation and the first part of the logical T operation may be combined, and the combined first part, a predetermined second part of the logical CNOT_C operation, and the selective execution part of the logical T operation may be arranged in the order in which they are listed.

The consecutive logical quantum operations target data logical qubit 1. The optimization process for simultaneously performing the logical T and CNOT_C operations is as follows. First, the first part of the logical T operation before optimization is to be combined with the first part of the logical CNOT_C operation, and to this end, initialization to |+〉 for the ancilla logical qubit in the first part of the logical CNOT_C operation is changed to transfer of the magic qubit |A〉 of the first part of the logical T operation. The combined operation is placed at the beginning of the operations after optimization. Then, the second part of the logical CNOT_C operation is placed in the middle of the operations after optimization. Finally, the selective execution part of the logical T operation is placed at the end of the operations after optimization. Accordingly, the first part of the logical T operation and the first part of the logical CNOT_C operation may be simultaneously performed, and finally, the logical T and CNOT_C operations may be simultaneously performed. The method of simultaneously performing consecutive logical T and CNOT_C operations includes the process of transferring the magic state |A〉 to the ancilla logical qubit, the process of deriving a joint measurement value (jm) by performing X-boundary merge and X-boundary split on data logical qubit 1 and the ancilla logical qubit, the process of performing Z-boundary merge and Z-boundary split on the ancilla logical qubit and data logical qubit 2, and the process of performing the selective execution part depending on the joint measurement value (jm). When the joint measurement value (jm) is 0, the selective execution part is not performed, whereas when the joint measurement value (jm) is 1, the selective execution part is performed. The method of performing the internal operations of the selective execution part is the same as that described in logical quantum operation combination 1.

The execution time of logical quantum operation combination 3 is reduced from 9.5T in the existing method to 6.5T after optimization.

Referring to FIG. 15, it can be seen that the process of simultaneously performing consecutive logical T, S, and CNOT_C operations included in logical quantum operation combination 4 by optimizing the same is illustrated. In FIG. 15, reference numeral 151 denotes a data logical qubit 1(DLQ1) (logical qubit for control(LQC)) of the circuit before optimization, 152 denotes an ancilla logical qubit(ALQ) of the circuit before optimization, 153 denotes a data logical qubit 2(DLQ2) (logical qubit for target(LQT)) of the circuit before optimization, 154 denotes a data logical qubit 1(DLQ1) (logical qubit for control(LQC)) of the circuit after optimization, 155 denotes an ancilla logical qubit(ALQ) of the circuit after optimization, and 156 denotes a data logical qubit 2(DLQ2) (logical qubit for target(LQT)) of the circuit after optimization. Further, in FIG. 15, B in B MERGE and B SPLIT denotes boundary, and T in T |A〉 and T |Y〉 denotes transfer.

Here, for consecutive logical T, logical S, and logical CNOT_C operations, among the rearranged logical operations, the first part of the logical T operation and the first part of the logical CNOT_C operation may be combined, the second part of the logical CNOT_C operation may be arranged after the combined first part, and the selective execution part of the logical T operation and the logical S operation may be combined and arranged at the end.

The consecutive logical quantum operations target data logical qubit 1. Logical quantum operation combination 4 allows the logical T, S, and CNOT_C operations to be simultaneously performed by applying the optimization methods of logical quantum operation combinations 1 and 3 together. That is, the simultaneous execution method of logical quantum operation combination 1 is applied such that the logical T and S operations are simultaneously performed. Also, the simultaneous execution method of logical quantum operation combination 3 is applied such that the logical T+S operation and the CNOT_C operation are simultaneously performed. The optimization process for simultaneously performing the logical T, S, and CNOT_C operations is as follows. First, the first part of the logical T operation before optimization is to be combined with the first part of the logical CNOT_C operation, and to this end, initialization to |+〉 for the ancilla logical qubit in the first part of the logical CNOT_C operation is changed to transfer of the magic qubit |A〉 in the first part of the logical T operation. The combined operation is placed at the beginning of the operations after optimization. Then, the second part of the logical CNOT_C operation is placed in the middle of the operations after optimization. Finally, the selective execution part of the logical T operation is to be combined with the logical S operation, and to this end, the condition for executing the selective execution part is changed from jm to jm+1. The combined operation is placed at the end of the operations after optimization. Accordingly, the first part of the logical T operation and the first part of the logical CNOT_C operation may be simultaneously performed, and the selective execution part of the logical T operation and the logical S operation may be simultaneously performed. Finally, the logical T, S, and CNOT_C operations may be simultaneously performed.

The simultaneous execution methods of logical quantum operation combinations 4 and 3 are identical, except that the condition for executing the selective execution part is jm+1 in logical quantum operation combination 4 but is jm in logical quantum operation combination 3. In other words, in the simultaneous execution method of logical quantum operation combination 4, when the joint measurement value (jm) is 0, the selective execution part is performed, whereas when the joint measurement value (jm) is 1, the selective execution part is not performed.

The execution time of logical quantum operation combination 4 is reduced from 12.5T in the existing method to 6.5T after optimization.

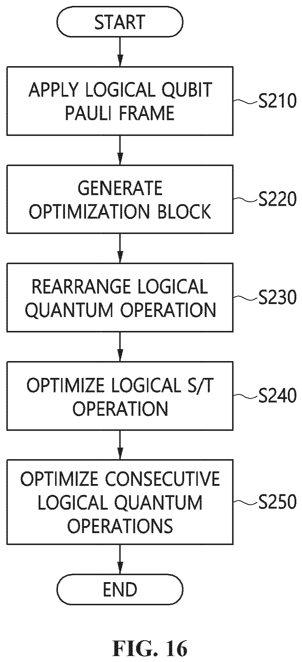

FIG. 16 is a flowchart illustrating a method for optimizing a logical quantum circuit according to an embodiment of the present disclosure.

Referring to FIG. 16, in the method for optimizing a logical quantum circuit according to an embodiment of the present disclosure, first, a logical qubit Pauli frame may be applied at step S210.

That is, at step S210, a Pauli frame for a logical qubit is performed, whereby all Pauli operations within a logical quantum circuit may be moved just before a logical measurement operation at the end of the logical quantum circuit.

Here, at step S210, a Pauli frame function for a logical T operation, which was previously impossible, may be additionally supported.

Here, at step S210, a logical X operation and a logical Z operation are moved just before the measurement operation, whereby the circuit structure may be simplified.

Here, at step S210, the Pauli operations are not actually performed and may be reflected when interpreting measurement results.

Here, at step S210, even a logical X operation located before a logical T operation may be moved to the later stage by being transformed into a logical X S operation to enable the movement thereof.

The moved logical S operation is merged or removed in a subsequent optimization process, thereby contributing to reducing the total number of operations.

Accordingly, only logical S, T, H, and CNOT operations remain in the operation unit, and X and Z operations are moved to the measurement unit to serve as a basis for lattice surgery optimization.

Also, in the method for optimizing a logical quantum circuit according to an embodiment of the present disclosure, an optimization block may be generated at step S220.

That is, at step S220, optimization blocks may be generated on a block basis by separating operations within the logical quantum circuit into sections.

Here, at step S220, blocks are generated for each logical qubit, and multiple optimization blocks may be present in a single logical qubit.

Here, at step S220, the start point and end point of the optimization block may be set based on a logical H operation and an operation performed on at least one target qubit of a logical CNOT operation within the logical quantum circuit.

Each of the start operation and end operation of a block is set to an H or CNOT_T operation, and a total of four types of block configuration formats may be supported.

The optimization block includes logical S, T, and CNOT_C operations therein, which may be subject to subsequent operation rearrangement and merge optimization.

Here, at step S220, the boundary between blocks is clearly established to enable efficient optimization in subsequent steps.

The generated optimization blocks may be used as a basic unit for sequential or parallel processing of logical operations.

An optimization block of the present disclosure is generated for each logical qubit, and multiple optimization blocks may be present in a single logical qubit. The start and end of the optimization block may be set to a logical H operation or an operation performed on a target qubit of a CNOT operation. The logical CNOT operation is performed on two qubits, which are control and target qubits, and in the present disclosure, operations applied to the control and target qubits of the logical CNOT operation are designated by CNOT_C and CNOT_T, respectively. A total of four formats may be set for the start and end of an optimization block of the present disclosure.
1) Start (logical H operation), end (logical H operation)
2) Start (logical H operation), end (logical CNOT_T operation)
3) Start (logical CNOT_T operation), end (logical H operation)
4) Start (logical CNOT_T operation), end (logical CNOT_T operation)

Also, in the method for optimizing a logical quantum circuit according to an embodiment of the present disclosure, rearrangement of the logical quantum operations may be performed at step S230.

That is, at step S230, the order of the logical operations within the optimization block may be rearranged.

Here, at step S230, rearrangement may be performed for the logical operations, excluding the logical operations at the start point and end point of the optimization block.

Here, at step S230, the optimization task may be performed on the logical S, T, and CNOT_C operations within the optimization block, excluding the logical quantum operations that specify the start and end of the optimization block.

Also, in the method for optimizing a logical quantum circuit according to an embodiment of the present disclosure, logical S/T operation optimization may be performed at step S240.

That is, at step S240, the total number of logical S and T operations may be reduced by merging consecutive logical S operations and consecutive logical T operations.

Here, at step S240, the number of logical T operations may be reduced by merging two consecutive logical T operations and transforming the same into a single S operation, as a first process.

If an even number (2N) of logical T operations are present, all of the logical T operations are merged and disappear, and they are transformed into N logical S operations. If an odd number (2N+1) of logical T operations are present, they are transformed into a single logical T operation and N logical S operations. Here, N is an integer equal to or greater than zero (N >= 0).

Here, at step S240, the number of logical S operations may be reduced by merging two consecutive logical S operations and transforming the same into a single Z operation, as a second process.

If an even number (2N) of logical S operations are present, all of the logical S operations are merged and disappear, and they are transformed into N logical Z operations. If an odd (2N+1) number of logical S operations are present, they are transformed into a single logical S operation and N logical Z operations. The logical Z operations generated in the second process are moved just before the logical measurement operation within the measurement unit by applying a logical qubit Pauli frame. Here, N is an integer equal to or greater than zero (N >= 0).

Also, in the method for optimizing a logical quantum circuit according to an embodiment of the present disclosure, optimization of consecutive logical quantum operations may be performed at step S250.

That is, at step S250, when consecutive logical quantum operations are performed using lattice surgery, they are set to be simultaneously performed in parallel, rather than sequentially, whereby optimization capable of reducing the execution time may be performed.

Here, at step S250, a combination of a logical T operation, a logical S operation, and a CNOT_C operation, which is applied to a control qubit of a logical CNOT operation, may be set as the target to be performed in parallel.

Here, at step S250, a lattice surgery-based parallel execution technique may be applied to inject a magic state (|A〉 or |Y〉) into an ancilla logical qubit and to perform boundary merge and split between a data logical qubit and the ancilla qubit.

Here, at step S250, whether to perform selective execution is determined depending on a joint measurement value (jₘ), and an additional merge operation may be performed depending on the determination result.

Here, at step S250, individual parallel execution techniques may be applied for a total of four combinations (T+S, S+CNOT_C, T+CNOT_C, and T+S+CNOT_C).

Here, at step S250, in order to combine at least two of the predetermined consecutive logical operations, among the rearranged logical operations, parallel execution may be set by performing at least one of changing a predetermined execution condition, or changing a magic state, or a combination thereof.

Here, at step S250, for consecutive logical T and logical S operations, among the rearranged logical operations, a condition for executing a predetermined selective execution part of the logical T operation, which is identical to the logical S operation, may be changed, and the logical S operation and the selective execution part of the logical T operation may be combined.

Here, at step S250, for consecutive logical S and logical CNOT_C operations, among the rearranged logical operations, an ancilla logical qubit in the first part of the logical CNOT_C operation may be changed to be identical to a magic qubit for an ancilla logical qubit of the logical S operation, and the logical S operation and the first part of the logical CNOT_C operation may be combined.

Here, at step S250, for consecutive logical T and logical CNOT_C operations, among the rearranged logical operations, an ancilla logical qubit of a predetermined first part of the logical CNOT_C operation may be changed to be identical to a magic qubit for an ancilla logical qubit of the first part of the logical T operation, the predetermined first part of the logical CNOT_C operation and the first part of the logical T operation may be combined, and the combined first part, a predetermined second part of the logical CNOT_C operation, and the selective execution part of the logical T operation may be arranged in the order in which they are listed.

Here, at step S250, for consecutive logical T, logical S, and logical CNOT_C operations, among the rearranged logical operations, the first part of the logical T operation and the first part of the logical CNOT_C operation may be combined, the second part of the logical CNOT_C operation may be arranged after the combined first part, and the selective execution part of the logical T operation and the logical S operation may be combined and arranged at the end.

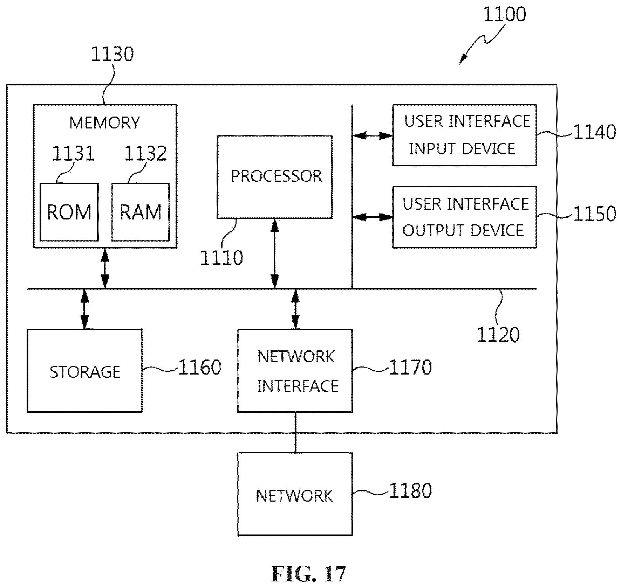

FIG. 17 is a view illustrating a computer system according to an embodiment of the present disclosure.

Referring to FIG. 17, the apparatus for optimizing a logical quantum circuit according to an embodiment of the present disclosure may be implemented in a computer system 1100 including a computer-readable recording medium. As illustrated in FIG. 17, the computer system 1100 may include one or more processors 1110, memory 1130, a user-interface input device 1140, a user-interface output device 1150, and storage 1160, which communicate with each other via a bus 1120. Also, the computer system 1100 may further include a network interface 1170 connected to a network 1180. The processor 1110 may be a central processing unit or a semiconductor device for executing processing instructions stored in the memory 1130 or the storage 1160. The memory 1130 and the storage 1160 may be any of various types of volatile or nonvolatile storage media. For example, the memory may include ROM 1131 or RAM 1132.

Also, the apparatus for optimizing a logical quantum circuit according to an embodiment of the present disclosure may include all types of apparatuses, devices, and machines for processing digital and/or quantum data, as well as a programmable digital processor, a programmable quantum processor, a digital computer, a quantum computer, multiple digital and quantum processors or computers, and a combination thereof. This apparatus may also be or further include special-purpose logic circuitry, for example, a field-programmable gate array (FPGA), an application-specific integrated circuit (ASIC), or a quantum simulator, i.e., a quantum data processing device designed to simulate or generate information about a specific quantum system. In particular, the quantum simulator is a special-purpose quantum computer that does not have the capability to perform general-purpose quantum computation. The apparatus may optionally include code for generating an execution environment for digital and/or quantum computer programs by being added to hardware, for example, code constituting processor firmware, a protocol stack, a database management system, an operating system, or a combination of one or more selected therefrom.

The apparatus for optimizing a logical quantum circuit according to an embodiment of the present disclosure includes one or more processors 1110 and memory 1130 for storing at least one program executed by the one or more processors 1110, and the at least one program moves Pauli operations just before a final logical measurement operation within a logical quantum circuit by performing a Pauli frame, generates an optimization block on a block basis by separating logical operations within the logical quantum circuit into sections, rearranges the order of logical operations within the optimization block, merges consecutive logical operations, among the rearranged logical operations, and sets the consecutive logical operations within the logical quantum circuit to be performed in parallel.

Here, the at least one program may move a logical X operation and a logical Z operation within the logical quantum circuit just before the logical measurement operation.

Here, the at least one program may transform a logical X operation located before a logical T operation within the logical quantum circuit into a logical X S operation and move the transformed operation after the logical T operation.

Here, the at least one program may set the start point and end point of the optimization block based on a logical H operation and an operation performed on at least one target qubit of a logical CNOT operation within the logical quantum circuit.

Here, the at least one program may perform rearrangement on logical operations, excluding the logical operations at the start point and end point of the optimization block.

Here, the at least one program may arrange the logical operations subject to the rearrangement in the order of a logical T operation, a logical S operation, and a logical CNOT_C operation.

Here, the at least one program may merge two consecutive logical T operations, among the rearranged logical operations, and transform the same into a single logical S operation.

Here, the at least one program may merge two consecutive logical S operations, among the rearranged logical operations, and transform the same into a single logical Z operation.

Here, the at least one program may set the consecutive logical operations to be performed in parallel by performing at least one of changing a predetermined execution condition, or changing a magic state, or a combination thereof in order to combine at least two of predetermined consecutive logical operations, among the rearranged logical operations.

Here, for consecutive logical T and logical S operations, among the rearranged logical operations, the at least one program may change a condition for executing a predetermined selective execution part of the logical T operation, which is identical to the logical S operation, and combine the logical S operation and the selective execution part of the logical T operation.

Here, for consecutive logical S and logical CNOT_C operations, among the rearranged logical operations, the at least one program may change an ancilla logical qubit in the first part of the logical CNOT_C operation to be identical to a magic qubit for an ancilla logical qubit of the logical S operation and combine the logical S operation and the first part of the logical CNOT_C operation.

Here, for consecutive logical T and logical CNOT_C operations, among the rearranged logical operations, the at least one program may change an ancilla logical qubit of a predetermined first part of the logical CNOT_C operation to be identical to a magic qubit for an ancilla logical qubit of the first part of the logical T operation, combine the predetermined first part of the logical CNOT_C operation and the first part of the logical T operation, and arrange the combined first part, a predetermined second part of the logical CNOT_C operation, and the selective execution part of the logical T operation in the order in which they are listed.

Here, for consecutive logical T, logical S, and logical CNOT_C operations, among the rearranged logical operations, the at least one program may combine the first part of the logical T operation and the first part of the logical CNOT_C operation, arrange the second part of the logical CNOT_C operation after the combined first part, and arrange a combination of the selective execution part of the logical T operation and the logical S operation at the end.

The present disclosure may optimize a logical quantum circuit in a logical qubit system using a surface code and lattice surgery.

Also, the present disclosure may reduce the size of a logical quantum circuit and reduce the execution time of the logical quantum circuit.

Also, the present disclosure may reduce the resources required for magic state distillation and transfer that are additionally required for logical S and T operations.

As described above, the apparatus and method for optimizing a logical quantum circuit according to the present disclosure are not limitedly applied to the configurations and operations of the above-described embodiments, but all or some of the embodiments may be selectively combined and configured, so the embodiments may be modified in various ways.

## Claims

1. An apparatus for optimizing a logical quantum circuit, comprising:
one or more processors; and
memory for storing at least one program executed by the one or more processors,
wherein
the at least one program
moves Pauli operations just before a final logical measurement operation within a logical quantum circuit by performing a Pauli frame,
generates an optimization block on a block basis by separating logical operations within the logical quantum circuit into sections,
rearranges an order of logical operations within the optimization block,
merges consecutive logical operations among the rearranged logical operations, and
sets consecutive logical operations within the logical quantum circuit to be performed in parallel.

2. The apparatus of claim 1, wherein the at least one program moves a logical X operation and a logical Z operation within the logical quantum circuit just before the logical measurement operation.

3. The apparatus of claim 2, wherein the at least one program transforms a logical X operation located before a logical T operation within the logical quantum circuit into a logical X S operation and moves the transformed operation after the logical T operation.

4. The apparatus of one of claims 1 to 3, wherein the at least one program sets a start point and an end point of the optimization block based on a logical H operation and an operation performed on at least one target qubit of a logical CNOT operation within the logical quantum circuit.

5. The apparatus of claim 4, wherein the at least one program performs rearrangement on logical operations, excluding logical operations at the start point and end point of the optimization block.

6. The apparatus of claim 5, wherein the at least one program arranges the logical operations subject to the rearrangement in an order of a logical T operation, a logical S operation, and a logical CNOT_C operation.

7. The apparatus of one of claims 1 to 6, wherein the at least one program merges two consecutive logical T operations, among the rearranged logical operations, thereby transforming the two consecutive logical T operations into a single logical S operation.

8. The apparatus of claim 7, wherein the at least one program merges two consecutive logical S operations, among the rearranged logical operations, thereby transforming the two consecutive logical S operations into a single logical Z operation.

9. The apparatus of one of claims 1 to 8, wherein the at least one program sets the consecutive logical operations to be performed in parallel by performing at least one of changing a predetermined execution condition, or changing a magic state, or a combination thereof in order to combine at least two of predetermined consecutive logical operations, among the rearranged logical operations.

10. The apparatus of claim 9, wherein for consecutive logical T and logical S operations, among the rearranged logical operations, the at least one program changes a condition for executing a predetermined selective execution part of the logical T operation, which is identical to the logical S operation, and simultaneously performs the logical S operation and an operation of the selective execution part of the logical T operation.

11. The apparatus of claim 10, wherein for consecutive logical S and logical CNOT_C operations, among the rearranged logical operations, the at least one program changes an ancilla logical qubit of a predetermined first part of the logical CNOT_C operation to be identical to a magic qubit for an ancilla logical qubit of the logical S operation and simultaneously performs the logical S operation and an operation of the first part of the logical CNOT_C operation.

12. The apparatus of claim 11, wherein for consecutive logical T and logical CNOT_C operations, among the rearranged logical operations, the at least one program changes an ancilla logical qubit of a predetermined first part of the logical CNOT_C operation to be identical to a magic qubit for an ancilla logical qubit of a first part of the logical T operation, combines the predetermined first part of the logical CNOT_C operation and the first part of the logical T operation, and arranges the combined first part, a predetermined second part of the logical CNOT_C operation, and a selective execution part of the logical T operation in an order in which they are listed.

13. The apparatus of claim 12, wherein for consecutive logical T, logical S, and logical CNOT_C operations, among the rearranged logical operations, the at least one program combines a first part of the logical T operation and a first part of the logical CNOT_C operation, arranges a second part of the logical CNOT_C operation after the combined first part, and arranges a combination of a selective execution part of the logical T operation and the logical S operation at an end.

14. A method for optimizing a logical quantum circuit, performed by an apparatus for optimizing a logical quantum circuit, comprising:
moving Pauli operations just before a final logical measurement operation within a logical quantum circuit by performing a Pauli frame;
generating an optimization block on a block basis by separating logical operations within the logical quantum circuit into sections;
rearranging an order of logical operations within the optimization block;
merging consecutive logical operations, among the rearranged logical operations; and
setting consecutive logical operations within the logical quantum circuit to be performed in parallel.

15. The method of claim 14, wherein moving the Pauli operations comprises moving a logical X operation and a logical Z operation within the logical quantum circuit just before the logical measurement operation.
